# EUROPEAN PATENT APPLICATION

(11) **EP 2 157 443 A1**
(43) Date of publication of application: **24.02.2010**
(21) Application number: 08252791.2
(22) Date of filing: 20.08.2008
(51) Int. Cl.: G01S 13/02, H01Q 21/28, H01Q 9/28, H01Q 19/30

(54) **High frequency surfacewave radar**

(71) Applicant: BAE Systems PLC, 6 Carlton Gardens London SW1Y 5AD (GB)
(72) Inventor: The designation of the inventor has not yet been filed
(74) Representative: Thomas, Michael Andrew

(57) **Abstract**

A high frequency surfacewave radar installation is provided comprising an array of antenna elements. The array comprises a first antenna element which is configured to transmit a signal having a frequency in the range of a first octave together with a second antenna element which is configured to transmit a signal having a frequency in the range of a second octave.

## Description

The present invention relates to a high frequency surfacewave radar (HFSWR) installation.

Conventional HFSWR transmits an RF signal at a single frequency and detects energy which is returned from objects in the path of the transmitted RF signal.

The range of HFSWR is significantly enhanced over standard ground - based radar in that the range to a surface target that might be detected is in the order of hundreds of kilometres. The frequency range associated with high frequency radar is approximately 3-30 MHz and the corresponding wavelength of the transmitted signal is measured in tens of meters, say 10m to 100m. The wavelength of the signal to be transmitted directly governs the size of an associated transmitting antenna element. The magnitude of a HFSWR installation comprising a number of such antenna elements in an array can therefore be significant.

Conventional, single frequency HFSWR are limited in their performance due to external influences such as man made interference, for example radio transmissions. Consequently, such HFSWR are considered to be "external noise" limited as these external signals dominate any internal noise levels of the internal mechanism such as receive electronics of the radar installation. Alternative radar, such as those operating at microwave frequencies, are typically "internal noise" limited as the noise generated by the internal mechanism of the radar dominate any external noise signals at microwave frequencies.

It is an aim of the present invention to address the aforementioned disadvantages associated with High Frequency Surfacewave Radar and alleviate some of the problems coupled therewith.

According to a first aspect, the present invention provides a high frequency surfacewave radar installation comprising an array of antenna elements, the array comprising:
a first antenna element configured to exhibit a first characteristic; and
a second antenna element configured to exhibit a second characteristic, related to the first characteristic but different therefrom.

By providing an antenna installation having an array of antenna elements of differing configurations to achieve alternative characteristics, a compact antenna installation having greater functionality can be achieved.

The first antenna element may be a doublet capable of directional transmission and/or reception and the second antenna element may be a single dipole capable of omnidirectional transmission and/or reception. By combining different types of antenna element the overall magnitude of the antenna installation may be optimised.

Alternatively the first antenna element may be configured to transmit a signal having a frequency in the range of a first octave and the second antenna element may be configured to transmit a signal having a frequency in the range of a second octave. In which case, a compact installation having a significantly extended bandwidth may be achieved. The first and second antenna elements may be doublets capable of directional transmission and/or reception and the array may comprise a third antenna element, wherein the third element may be a single dipole capable of omnidirectional transmission and/or reception. Provision of one or more antenna elements having a single dipole configuration, the overall magnitude of an antenna installation having an extended band width may be optimised.

According to a second aspect, the present invention provides a high frequency surfacewave radar installation comprising an array of antenna elements, the array comprising:
a first antenna element configured to transmit a signal having a frequency in the range of a first octave; and
a second antenna element configured to transmit a signal having a frequency in the range of a second octave.

By providing first and second antenna elements each having capability for transmitting in different octaves of frequency, a compact antenna installation having an extended bandwidth can be achieved.

The second antenna element may be smaller than the first antenna element.

The first octave may represent a range of up to 8 MHz and the second octave may represent a range from 8 to 16 MHz.

The array may comprise a third antenna element configured to transmit a signal having a frequency in the range of a third octave. The third antenna element may be smaller than the second antenna element and the third octave may represent a range above 16 MHz.

The antenna elements may be configured to receive a signal on any frequency covered by the transmission from the radar installation.

The present invention will now be described in detail, with reference to the accompanying drawings, in which;
Figure 1 illustrates an antenna;
Figure 2 illustrates a schematic representation of an architecture of the antenna of Figure 1;
Figure 3 illustrates a schematic representation of an alternative antenna; and
Figure 4 illustrates a schematic representation of another alternative antenna.

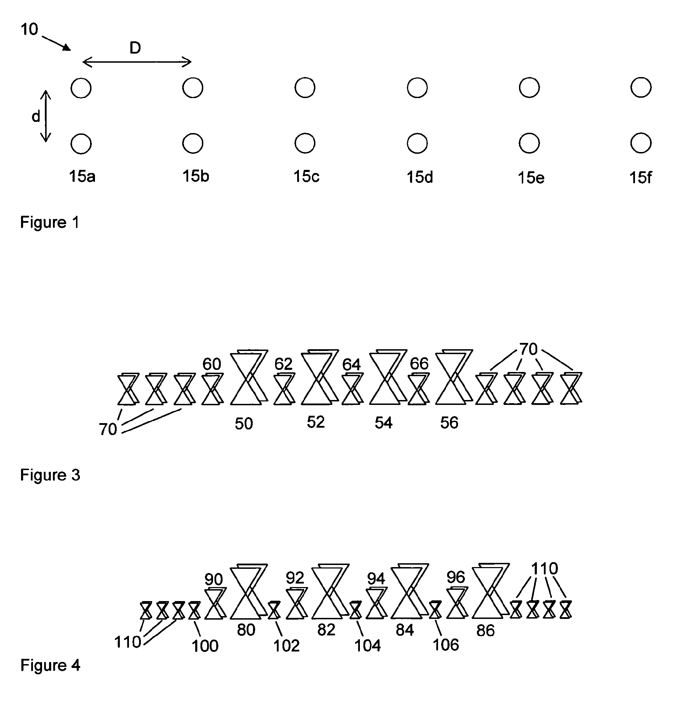

The antenna 10 illustrated in Figure 1 comprises an array of antenna elements 15a, 15b, 15c, 15d, 15e, 15f. In this configuration each element is represented by a doublet. Each doublet comprises a pair of tetrahedral dipoles in a conventional manner. By providing the dipoles in pairs, each doublet is able to generate and transmit a directional signal. The phase relationship between the two dipoles reinforces forward transmission of a signal whilst reducing backward transmission of the signal hence providing directionality of the antenna element. The extent of this reinforcement is denoted by the 'front to back ratio' of a particular doublet configuration and the configuration is chosen to achieve a particular result. In this embodiment, the front to back ratio is approximately 15 dB.

The spacing, d, between dipoles in any doublet of the array is approximately a quarter of the wavelength (i.e. d=λ/4) and the spacing, D, between each adjacent doublet in the array is approximately half the wavelength (D= λ /2).

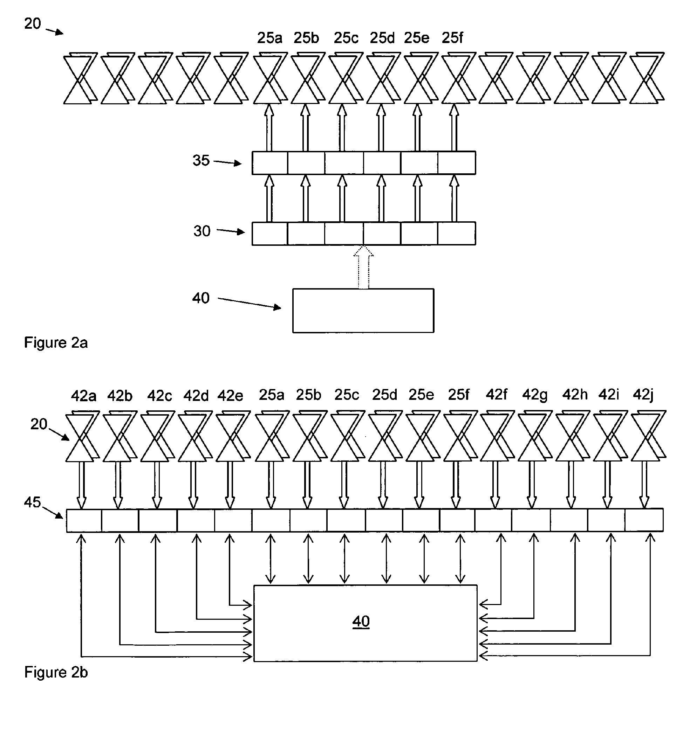

Figure 2 illustrates a schematic representation of an example antenna 20. The antenna 20 comprises an array of sixteen elements, up to six of which, hereinafter referred to as transmitting elements 25a-25f, may be used when the antenna 20 is transmitting as illustrated in Figure 2a and all of which may be used when the antenna 20 is receiving as illustrated in Figure 2b. The six transmit elements 25a-25f are each capable of transmission and reception using duplexer units which comprise both a transmission port and a receive port. The transmit elements each comprise a doublet and has associated therewith a digital waveform generator 30 and an amplifier 35. In this example, the amplifier is a 1 kW solid state power amplifier. A controller 40 is provided to supply instructions to the waveform generator 30, the amplifier 35 and the antenna 20.

Of the six transmit elements 25a-25f, they may all be used in combination to transmit an outgoing signal or, alternatively a reduced number, even a single element, may be used to transmit the outgoing signal. The number and configuration of elements used to transmit affects the form of signal generated thereby.

If all the elements 25a-25f transmit simultaneously in phase with one another, a focused beam having high gain is output in a plane normal to the plane of the array. A wider beam, of lower gain, can be achieved by using a single element to output the transmission signal. Phase ramps or weighting can be implemented across the array in order to achieve an electronic beam steering capability.

A single frequency can be transmitted by any particular element. Alternatively, multiple carrier frequencies can be generated within the waveform to enable more than one frequency to be transmitted by the, or each, element at any one time.

Transmit signals are generated by the digital waveform generator 30 associated with each element. The waveform generators are fully controlled by software. The software replicates analogue production of one or more signals and generates parallel streams of data having multiple frequency content. Such a signal represents a number of independent signals, each having a different transmission frequency. The waveform characteristics for each element are independent, fully programmable and arbitrary. In other words, the generation of simultaneous, multiple frequency and beam combinations is enabled on transmission from the antenna 20.

Figure 2b illustrates operation of antenna 20 in a receive mode. The antenna 20 comprises a plurality of elements 42a-42j in addition to the aforementioned transmit elements 25a-25f. Each element 25a-25f, 42a-42j is capable of receiving incoming signals.

In this example, each element 25a-25f, 42a-42j is provided with its own dedicated receiver 45, capable of simultaneous receipt and detection of signals having up to four frequencies. The receiver is configured to receive the incoming signal which, as described above, may have multiple frequency content. This incoming signal is then digitised and discretised into the separate detected independent signals and passed to controller 40 for signal processing. The processing required to perform this discretisation relies on the knowledge that four particular distinct signals are being received on four known frequencies.

On receipt, simultaneous receive beam forming is used across the entire array so that electronic beam steering may be used to detect targets in particular directions.

One element, say doublet 42a, is configured with reverse phasing to act as a Rear Lobe Blanking (RLB) antenna. Another of the elements 42j serves as an environmental monitoring antenna in addition to being part of the antenna array 20.

In the aforementioned embodiments each antenna element is provided by a doublet, i.e. a pair of cooperating dipoles. In using doublets exclusively the size and cost of the antenna array 20 may become significant. It is desirable to reduce the complexity and magnitude of the array. In a signal transmission mode it is desirable to transmit the signal directionally however, in a reception mode directionality becomes less critical and, therefore, those antenna elements used solely for receiving signals, elements 42b-42j, may comprise single dipoles rather than doublets. In so doing, the number of components in each antenna element is halved thus reducing the material costs, the installation costs and maintenance associated therewith.

In a more sophisticated embodiment, the functionality of the antenna 10 is further expanded. Conventional radar operate in a relatively narrow frequency band. However, the apparatus described in the aforementioned embodiment is substantially independent of the operating frequency except in terms of the geometry presented by each antenna element. In particular, it is the height of the dipole that determines the frequency that can be transmitted therefrom.

Each tetrahedral dipole forming the antenna array 20 for the first embodiment stands approximately 8m high. The distance, d, between each tetrahedral dipole of a doublet is approximately 6m [λ/4]. The distance, D, between adjacent doublets is approximately λ/2 [10-12m] thus the antenna array 20 is approximately 200 m long. This magnitude of array is required in order to achieve a spacing through which signals can be received and processed to yield quantifiable data.

Whilst the tetrahedral dipole configuration exhibits a greater frequency range than say a conventional monopole or dipole, the range is still limited to a single octave, for example 8-16 MHz. The duplexer unit associated with each doublet leads to some inherent restrictions in the device, however the primary restriction of the device is in the physical dimensions, particularly the height, of the dipole itself. In order to cover a greater frequency (i.e. a wider bandwidth) dipoles having a different physical magnitude may be introduced into the antenna array. To achieve a higher frequency, a smaller sized dipole may be provided.

Figure 3 illustrates how dipoles (or other antenna elements) of two different sizes can be interlaced with one another in order to achieve two octaves of coverage.

Eight elements 50 to 56 and 60 to 66 are used for transmission and reception whilst the remainder of the elements 70 are used only to receive signals. As illustrated, each element is provided by a doublet.

The larger elements 50, 52, 54, 56 transmit on lower frequencies F1, F2, F3, F4, say in the range from 4-8 MHz. Meanwhile, the smaller elements 60, 62, 64, 66 transmit at frequencies F5, F6, F7, F8 in a higher frequency range, say in the range 8-16 MHz.

A high level of power must be provided to each transmit element of the antenna, however, whilst efficiency is of concern during transmit it is less important on receipt. Consequently, the remainder of the smaller elements 70 can be used to receive the low frequency signals in addition to the higher frequency signals as the doublet of each respective element are able to receive all frequencies although some losses will occur.

Antenna elements having an active tuning capability can be used in place of elements having a different physical magnitude. Such elements are particularly effective on receive where efficiency is less critical.

In a more sophisticated embodiment, illustrated in Figure 4, three sizes of dipole could be interspersed with one another in order to achieve an installation covering three octaves.

In this example, twelve antenna elements 80 to 86, 90 to 96 and 100 to 106 are used for transmission and reception whilst the remainder of the elements 110 are only used to receive signals.

The larger elements 80, 82, 84, 86 transmit on lower frequencies F1, F2, F3, F4, say in the range from 4-8 MHz. Meanwhile, the medium sized elements 90, 92, 94, 96 transmit at frequencies F5, F6, F7, F8 in a higher frequency range, say 8-16MHz. The smallest elements 100, 102, 104, 106 transmit at the highest end of the "high frequency" band, say in the range 16-30MHz.

By using an increased frequency range, a more comprehensive surveillance picture can be collated. In particular, alternative traces can be considered and compared when clutter is present, in order to ascertain the location of a target. In this way, reflections due to clutter can more effectively be eliminated and targets otherwise occluded can be detected.

Further design selections can be made in order to minimise/optimise the magnitude and cost of an antenna installation, especially where a particular target type is envisaged. For example, ships are large, slow moving targets that require lower frequencies to be used. This suggests that larger antenna elements ought to be employed. However, if the transmission array is land based, it is likely that the general direction of the anticipated targets is known (i.e. out to sea) and therefore the doublet arrangement for each antenna element is not required as the directionality associated therewith is redundant. Consequently, although the magnitude of each transmitting dipole is large to provide an accurate, low frequency signal. Each element need only comprise a single dipole rather than a doublet, thus halving the magnitude of the element.

In contrast, aircraft targets could be located anywhere and so the directionality afforded by the doublet arrangement is required. However, due to the speed and magnitude of the target type, higher frequencies are required and so the physical magnitude of each dipole is reduced.

The antennae discussed above each represent a monostatic architecture, whereby the transmit antenna and the receive antenna collocated. The aforementioned principals can readily be applied to a bistatic architecture, whereby the transmit antenna is located remotely from the receive antenna, or in a multistatic architecture where one or more remotely located additional antennae are provided.

## Claims

1. A high frequency surfacewave radar installation comprising an array of antenna elements, the array comprising:
a first antenna element configured to exhibit a first characteristic; and
a second antenna element configured to exhibit a second characteristic, related to the first characteristic but different therefrom.

2. An installation according to Claim 1, wherein the first antenna element is a doublet capable of directional transmission and/or reception and the second antenna element is a single dipole capable of omnidirectional transmission and/or reception.

3. An installation according to Claim 1, wherein the first antenna element is configured to transmit a signal having a frequency in the range of a first octave and the second antenna element is configured to transmit a signal having a frequency in the range of a second octave.

4. An installation according to Claim 3, wherein the first and second antenna elements are doublets capable of directional transmission and/or reception and wherein the array comprises a third antenna element, the third element being a single dipole capable of omnidirectional transmission and/or reception.

5. A high frequency surfacewave radar installation comprising an array of antenna elements, the array comprising:
a first antenna element configured to transmit a signal having a frequency in the range of a first octave; and
a second antenna element configured to transmit a signal having a frequency in the range of a second octave.

6. An installation according to any of Claims 3, 4 or 5, wherein the second antenna element is smaller than the first antenna element.

7. An installation according to any of Claims 3 to 6, wherein the first octave represents a range of up to 8 MHz.

8. An installation according to any of Claims 3 to 7, wherein the second octave represents a range from 8 to 16 MHz.

9. An installation according to any of Claims 3 to 8, wherein the array comprises a third antenna element configured to transmit a signal having a frequency in the range of a third octave

10. An installation according to Claim 9, wherein the third antenna element is smaller than the second antenna element.

11. An installation according to Claim 9 or Claim 10, wherein the third octave represents a range above 16 MHz.

12. An installation according to any preceding claim, wherein the antenna elements are configured to receive a signal on any frequency covered by the transmission from the radar installation.
